# EUROPEAN PATENT SPECIFICATION

(11) **EP 3 592 910 B1**
(45) Date of publication and mention of the grant of the patent: **18.10.2023**
(21) Application number: 18717980.9
(22) Date of filing: 08.03.2018
(51) Int. Cl.: E03F 5/04, G01D 5/34

(54) **GULLY SENSOR AND APPARATUS**
RINNENSENSOR UND VORRICHTUNG
CAPTEUR ET APPAREIL DE PUISARD

(30) Priority: 10.03.2017 GB 201703900
(43) Date of publication of application: 15.01.2020
(73) Proprietor: In Touch Limited, Morecambe, Lancashire LA4 4ET (GB)
(72) Inventor: BACK, Brian, Bishop's Stortford Hertfordshire CM22 7QU (GB); WALDEN, John, Morecambe Lancashire LA4 4ET (GB)
(74) Representative: Ahmad, Sheikh Shakeel
(86) International application number: PCT/GB2018/050589
(87) International publication number: WO 2018/162908

(56) References cited:
- EP-A1- 0 645 611
- CH-A5- 559 898
- US-A- 1 532 995
- US-A- 4 297 588

## Description

### Field of the invention

The present invention is in the field of sensors and apparatus for detecting matter, in particular, but not limited to roadside gully sensors using optical apparatus for detecting matter incumbent around the gully sensor.

### Background of the invention

Roadside gullies are typically installed on the sides of roads to convey excess water away from the road surface and into underground drainage systems. They will typically consist of a gully pot with a drain system at the bottom of the pot to allow collected water to be drained to a sewer system, and a solid grate covering the gully pot to prevent large objects from entering the pot and to prevent injury or damage to road vehicles.

The main purpose of including a gully on a roadside as opposed to including a direct opening to an underground drainage system is to minimise the amount of sediment, solid materials and hydrocarbons which enter the drains, as these may cause blockages and subsequently reduce the efficiency of the drains. Additionally, if the drain discharges directly into a sustainable drainage system (SuDs) or water course, any pollutant materials in the drain may also be discharged, which may subsequently have a detrimental environmental impact.. However, it is still possible for gullies themselves to become blocked by solid materials that fall through the grate. These blockages reduce the efficiency of drainage systems and may cause standing water to overflow onto the roads; however it is significantly easier to remove blockages from gullies than drainage systems. Additionally, gullies also act as sumps for contaminants and pollution which may cause a detrimental environmental impact if they get washed out of the gullies into the water courses. In order to maintain the efficiency and minimise the potential detrimental environmental impact of the drain and gully systems, it is desirable to be able to quickly tell when the gullies are becoming blocked.

A number of systems exist which help to determine when a gully is becoming blocked, and subsequently inform a user of the blockage. These may comprise a light source and a light detector which detect any interruption in the light path between the two due to matter present in the gully. However, these systems typically comprise different bodies for the source and the detector, the bodies being separated by a distance. These existing systems are susceptible to malfunction if a solid object is interceding between the source and the detector, where the solid object does not constitute a blockage of the gully. Examples of this may include leaves and litter which enter the gully and become stuck in between the two bodies. Additionally, the arrangement of having separate bodies can make it difficult to remove the apparatus from the gully for maintenance, particularly when the material in the gully solidifies around the apparatus.

Patent document GB2469111A describes a flood indicator for installation into man-made gullies, which uses a float device configured to be retained in one position if an overflow has occurred in that gully at any point. EP 0645611 A1 discloses a device for detecting a phase interface in a wastewater system, the device comprising a U-shaped housing.

The present invention has been devised to mitigate or overcome at least some of the problems mentioned above.

### Summary

According to the present invention there is provided a gully sensor according to claim 1.

The gully sensor may be configured such that the emitted light comprises infra-red light. Additionally or alternatively the gully sensor may be configured such that the emitted light comprises ultra-violet light.

The gully sensor may be configured such that the degree to which the gully is filled with matter is measured. The gully sensor may additionally or alternatively be configured such that the turbidity of the matter in the gully is measured.

The gully sensor may comprise a plurality of light sources. Additionally or alternatively the gully sensor may comprise a plurality of light detectors. Furthermore, the gully sensor may comprise between two to thirty two light sources and an equal number of light detectors, configured to make a number of measurements equal to the number of light sources at separate levels.

In an aspect of the gully sensor where there are provided a plurality of light sources and/or light detectors, the plurality of light sources and/or light detectors may be configured such that they are separated by a distance of between 2.5cm and 10cm. Furthermore, the plurality of light sources and/or light detectors may be configured such that they are separated by a distance of between 5cm and 8cm.

The gully sensor may comprise one or more electronic components for operating the at least one light source and/or light detectors. Furthermore, where electronic components are provided, the gully sensor may be configured such that the electronic components are accommodated on a single printed circuit board.

The gully sensor may be configured to transmit, via wired electronic means, signals from the one or more detectors to an external transmitter device.

The gully sensor may be configured for deployment in the gully by the attachment of a cable to the elongate body, said cable allowing the sensor to be adjustably positioned in the gully.

The gully sensor may be configured such that the third portion of the elongate body which is coupled with both the first and second portions is configured to house electronic components.

The gully sensor is configured such that the elongate body further comprises an outer wall. Furthermore, the outer wall of the elongate body may be configured to be partially transparent to wavelengths of light which are emitted by the one or more light sources. The outer wall may comprise a substantially uniform width. Yet furthermore, the outer wall of the elongate body may be comprised of transparent PETG. Additionally, the wall of the elongate body may be further configured such that it is of a thickness between 3mm and 5mm.

The gully sensor may be configured such that the elongate body is at least partially filled with a first filling material. Furthermore, the first filling material may be configured to be at least partially transparent to wavelengths of light which are emitted by the one or more light sources. Additionally, the first filling material may comprise a hardened resin.

Where the gully sensor is configured such that the elongate body is at least partially filled with a first filling material, the gully sensor may be further configured such that the proximal and distal ends of the elongate body are at least partially filled with a second filling material such that the first filling material is bounded at opposite ends of the elongate body by the second filling material. Additionally, the second filling compound may comprise an epoxy composite.

The gully sensor may be configured such that the elongate body comprises a set of mountings on the interior of the elongate body, configured to accommodate a printed circuit board. Where such a set of mountings are provided, the printed circuit board mountings may be configured to be of a thickness between 1mm and 3mm.

The gully sensor is configured such that a cross section of the elongate body may be configured to be substantially circular. Where the gully sensor is configured with a substantially circular cross section, the elongate body may be further configured such that the diameter of the substantially circular elongate body is between 40mm and 60 mm.

The gully sensor is configured such that a cross section of the housing is substantially C-shaped.

The gully sensor is configured such that a cross section of the elongate body includes an indented portion into which material in the gully is configured to pass. The gully sensor is additionally configured such that the light source is aligned to transmit light in a light path which passes through the indented portion.

The indented portion may be additionally configured to be of a width of between 10mm and 16mm at its most narrow point. Furthermore, the indented portion may additionally or alternatively be configured such that the indented portion is of a width between 12mm and 18mm at its widest point.

The walls of the indented portion may additionally comprise a first and second straight side wall and one straight bottom wall which connects the two side walls. Where such side walls are provided, the gully sensor may be further configured such that the side walls of the indented portion are of length between 10mm and 30mm. Furthermore, where such side and bottom walls are provided, the gully sensor may be further configured such that the straight side walls are tapered at an angle of between zero and ten degrees to the normal of the bottom wall. Yet furthermore, where such side and bottom walls are provided, the gully sensor may be further configured such that the side walls of the indented portion of the sensor comprise a polished interior and/or exterior face.

The gully sensor may be configured such that the sensor is encapsulated to the IP68 standard.

The gully sensor may comprise caps conveyed on the proximal and distal ends of the sensor. Furthermore, where such caps are provided, the proximal and distal caps may comprise rubber. Yet furthermore, where the gully sensor further comprises proximal and distal caps, a cross section of the proximal and distal caps may be further configured to be substantially C-shaped.

### Description of figures

Embodiments of the present invention will now be described in detail with reference to the accompanying drawings, in which:
Figure 1a shows an example of a side view of a gully sensor;
Figure 1b shows an example of a top down view of a form of the gully sensor of Figure 1a;
Figure 2 shows an example of the steps undertaken in detecting matter using a gully sensor;
Figure 3 shows an example of the steps undertaken in an operating mode of the gully sensor where the sensor is configured for minimal power consumption;
Figure 4a shows an example of a top down view of a gully sensor having a cross-section which includes a removed central portion;
Figure 4b shows an example of a top down view of a gully sensor having a "C-shaped" cross-section;
Figure 5a shows an example of a side view of a form of the gully sensor having multiple light sources and light detectors;
Figure 5b shows an example of a side view of a form of the gully sensor having multiple light sources and light detectors, wherein there are more light detectors than light sources;
Figure 5c shows an example of a side view of a gully sensor having multiple light sources and light detectors, wherein there are more light sources than light detectors;
Figure 6 shows an example of a top down view of a gully sensor having some of the internal components used in the sensor;
Figure 7 shows an example of a side view of a gully sensor attached to a cable.

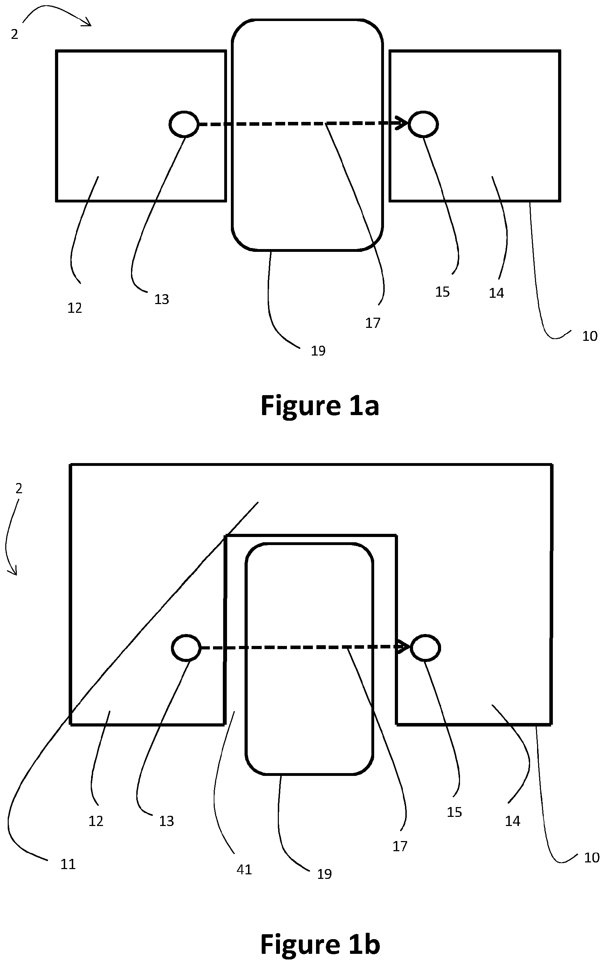

The embodiments according to figures 1a, 1b, 4a, 4b, 5a, 5b, 5c are not according to the claimed invention and are present for illustration purposes only.

### Detailed description

### General

There is presented an apparatus for detecting matter in a roadside gully. An example of such an apparatus can be seen in Figures 1a and 1b, with Figure 1a providing a side view of the apparatus, and Figure 1b providing a top down view. The apparatus 2 comprises an elongate body 10, which further comprises two portions, where an elongate body 10 refers to a body whose length is greater than its width. The first of these portions 12 accommodates at least one light source 13, with the second portion 14 accommodating at least one light detector 15 for detecting light emitted from the one or more light sources 13 along a light path 17 toward the detector 15. Furthermore, the apparatus comprises a cross section that is oriented along at least a portion of the light path. The cross section is also shaped to allow matter 19 to intersect at least a portion of the light path 17 and joins the first 12 and second 14 portions via the elongate body 10. The elongate body therefore may continuously stretch at least from and including the first portion and second portion. The apparatus may be a gully sensor for deployment within, and for detecting the presence of matter contained in a roadside gully. Other uses of the apparatus may be envisaged such as, but not limited to, measuring a fill or a silt level in a pond or other container.

Figure 1a illustrates a side view of the apparatus showing the two portions 12, 14 of the apparatus, a light source 13 and a light detector 15 and a configuration which allows matter 19 to intersect the light path 17 between the two for a given cross section of the apparatus. In this view it is not possible to see the cross section which allows for this whilst also showing the connection between the first 12 and second 14 portions via the elongate body 10. This can be seen in Figure 1b, which shows a top down view and illustrates said cross section with a connecting portion 11 in addition to the above features.

The arrangement of this apparatus 2 as a single elongate body 10 helps to prevent the buildup of solid detritus between the at least one light source 13 and at least one light detector 15, which may reduce the efficient functionality of the apparatus 2. This is achieved by providing at least a partial barrier which may prevent larger solid objects, suitable for becoming lodged in the sensor, from entering the portion of the cross section which is shaped to allow matter 19 to intersect a portion of the light path 17.

Additionally, the arrangement of the apparatus 2 as a single elongate body 10 helps to prevent the potential misalignment over time of the light source 13 and detector 15. If the apparatus 2 were moved by an external force, then due to the apparatus 2 being formed as a single body, the light source 13 and light detector 15 would both be compelled to move in such a way that the alignment between the two would not change.

### Example of operation

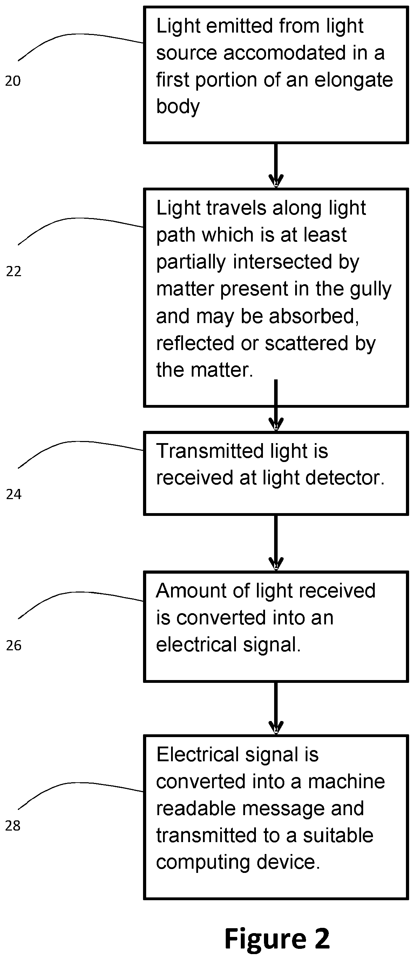

Figure 2 shows a block diagram describing an example of an operative procedure for the apparatus 2 to detect matter when the apparatus 2 is deployed in a roadside gully. A command is sent to the light source 13 in the first portion 12 of the apparatus 2 to begin emitting light 20 in a light path 17. The path 17 is preferentially configured to be directed substantially toward the light detector 15 housed in the second portion 14. The apparatus 2 is also configured to allow matter 19 in the gully to cross the light path 17, which may absorb, reflect, scatter or otherwise hinder the transmission of the light 22 which has been emitted from the light source 13. In the absence of any matter 19, it may be expected that none or little of the emitted light would be absorbed or scattered. In the presence of certain types and amounts of matter 19, it may be expected that some of the emitted light would be absorbed or scattered. In the presence of certain different types and amounts of matter 19, it may be expected that all of the emitted light would be absorbed or scattered.

Light which has not been absorbed or scattered by matter 19 in the gully may then be received by the light detector 24. The light detector 15 may then be configured to emit an electrical signal in response to the light which it receives 26. This signal may vary in dependence to the amount of light which is received (for example, the signal voltage may vary). The signal emitted from the light detector is then converted into a machine readable message by suitable processing means, with the message configured to include the details of how much light was received in correspondence with the nature of the electrical signal. This message may then be relayed electronically to a transmitting device such as a wireless Radio Frequency (RF) antenna so that it may be passed on to a suitable computing device for storage and/or analysis 28.

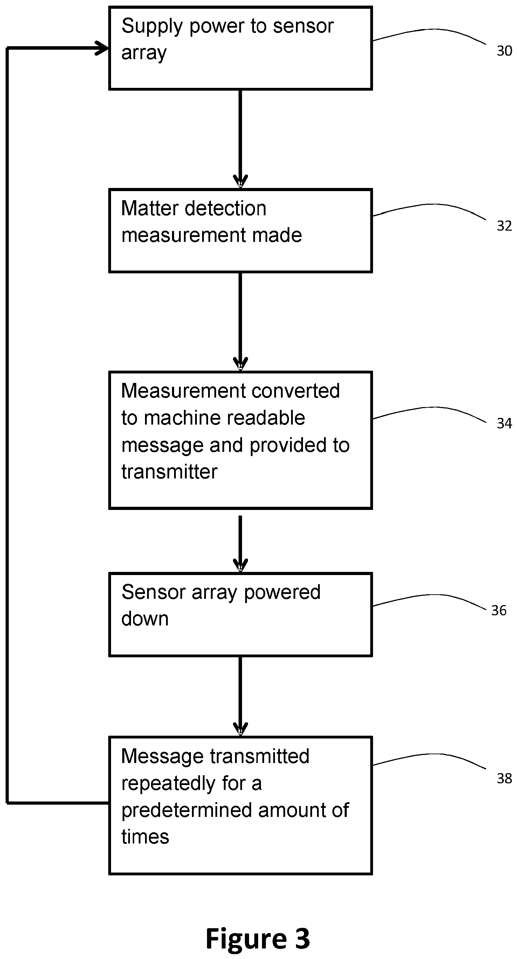

Figure 3 shows a block diagram illustrating a further operating mode which allows the apparatus 2 to make regular measurements whilst minimising power consumption of the apparatus 2. The apparatus 2 is preferentially configured to operate under battery power and therefore it is advantageous to develop a scheme which reduces power consumption in order to maintain a longer operating life. In this scheme, power is supplied to the apparatus 2 for a brief duration 30 so that a measurement of matter in the gully can be made 32. The data received is then converted into a machine readable message and passed electronically to a transmitting device 34. The apparatus 2 is then powered down 36. This message is then transmitted for a predetermined amount of times 38 before the apparatus 2 is powered up again to make a new measurement 30.

### Body

The elongate body 10 may further comprise a wall, where the remainder of the body 10 interior to the wall is hollow except from the above mentioned light sources 13, light detectors 15, any necessary electronics for the functioning of the apparatus 2, and mountings for said electronics. The wall may be of any thickness, including but not limited to wall thicknesses between 1.0 - 7.0mm, preferably 3.0 - 5.0mm, and further preferably 4.0mm.

The wall of the elongate body 10 as described above may be comprised of a substantially translucent or transparent material in the visible wavelength range. The same material may be a scratch resistant, optically clear material. Furthermore, it may also be comprised of a material which is suitable for manufacture via an extrusion moulding process. In a preferable arrangement of the apparatus, this material may comprise polyethylene terephthalate glycol-modified (PETG).

In some examples described herein, the apparatus may be further arranged so that the interior of the elongate body 10 is at least partially filled, with filling material. The body may be filled such that the filling material is arranged to at least surround the light sources 13, light detectors 15, any necessary electronics for the functioning of the apparatus 2, mountings for said electronics and preferably any other components at least partially housed within the walls. The components may be sufficiently packaged and/or the filling material may have suitable material properties (such as low values electrical conductivity) so that the contact of the filling material against the components does not reduce the operating functionality of these components. This filling process may be referred to as potting. In one arrangement the elongate body is filled to a level so that the filling (or potting) material at least covers all of the light sources and detectors. The filling material may be comprised of a clear hardened resin, which is highly resistant to the absorption of water, such as, but not limited to, ALH Systems NP1170.

As the apparatus 2 will typically be deployed in a roadside gully, it is expected that said apparatus 2 will be subjected to high moisture environments. Filling the elongate body 10 with a filling material helps to prevent such moisture from entering the elongate body 10 and causing malfunction within the apparatus 2. A further advantage of using a clear hardened resin as a filling material is that it absorbs and scatters a minimal amount of the light emitted from the at least one light source, thereby minimally affecting the detection efficiency of the apparatus 2.

In one example of the apparatus 2, the elongate body 10 further comprises a set of mounting struts on one or more interior surfaces of the wall of the body 10. These mounting struts are configured to securely accommodate a platform such as a Printed Circuit Board (PCB) upon which some or all of the components of the apparatus 2 may be arranged (for example electrical components for operating the detector and light source). A preferred thickness of said mounting struts would be 1 mm-3mm, and more preferably 1.6mm. In an example of the apparatus 2, these mounting struts may be integrally formed as part of the interior wall 10 moulding.

In a further embodiment of the apparatus 2, one or more surfaces of at least a portion of a wall of the elongate body 10 through which the light path intersects may be polished. This may be the inner wall surface, the outer wall surface or both. This confers the advantage of aiding the efficient transmission of light from the source 13 to the detector 15, as it helps to minimise the amount of scattering of light at the interfaces of the elongate body wall.

The wall may be a continuous wall extending around and forming at least part of the periphery of the elongate body.

### Shape

The apparatus 2 may have a cross section orientated along the light path wherein the elongate body is shaped about the cross section to allow matter 19 to intersect a portion of the light path 17 between the at least one light source 13 and at least one light detector 15. The cross section of the apparatus 2 joins the first and second portions 12, 14 via the elongate body 10.

In one example of the apparatus 2 as shown in Figure 1b, the elongate body 10 may comprise a cross section which is 'U-shaped.' In this example the first and second portion 12, 14 form two side portions extending substantially in the same direction (for example extending parallel) from a third connecting portion 11. The first and second portions 12, 14 may extend substantially the same distance away from the third portion 11 such that the cross section of the elongate body is symmetrical about a line of symmetry running through the centre of the third portion 11 in a direction substantially parallel to the direction of the first and second portions 12, 14 extending away from the third portion 11. Each side of the body 10 is substantially straight in this example. Also in this example, the apparatus 2 may be configured to allow matter 19 in the gully into an indented portion 41 of the elongate body formed between the first portion 12, the second portion 14 and a third connecting portion 11. The indented portion 41 is a section of the elongate body wherein the elongate body's outer peripheral wall is diverted inwardly from, and then subsequently back outward to, the nominal direction the wall is extending, thus forming a trench. The trench may be any suitable shape such as a U-shape or a sharp cornered U-shape. For a U-shape, the sides of the trench are formed by the outer surfaces of the wall on the first 12 and second 14 portions whilst the base of the U, connecting the two sides is formed from the outer surface of the wall on the third portion 11 Additionally, the indented portion 41 may comprise side walls which are tapered. The sides of the trench, in cross section, may taper away from each other as the walls extend outwardly away from the third portion 11. The tapered portions of the opposing side walls of the trough may have portions tapering linearly or nonlinearly. In one example, the outer peripheral wall of the elongate body is a tube wherein the trench extends along the length of the tube. In this example, the cross sectional profile of the trench remains substantially constant as the trench extends along the entire length of the tube. The depth of the trench may be any suitable depth, including but not limited to a depth extending over a third, but less than half of the largest tube diameter.

The bottom wall of the indented portion may be straight or curved, but in Figure 1b, it is straight. In an optional embodiment, the side walls of the indented portion may be substantially perpendicular to the bottom wall of the indented portion. Having a trench extending along the length of the body helps to prevent leaves and other matter from getting stuck or wedged in between the first 12 and second 14 portions. The trench may be a single trench extending at least along the portions of the elongate body where the light detectors and sources are aligned; or a plurality of separate trenches that are localised to each light source detector pair. Furthermore, because the first 12 and second 14 portions are part of a single extending body wherein the first 12 and second 14 portions are integrally connected by the third portion 11, the apparatus has better rigidity. This allows the first 12 and second 14 portions to maintain a fixed positional relationship with each other over time, which in turn means that the at least one light source 13 and at least one light detector 15 are unlikely to be misaligned.

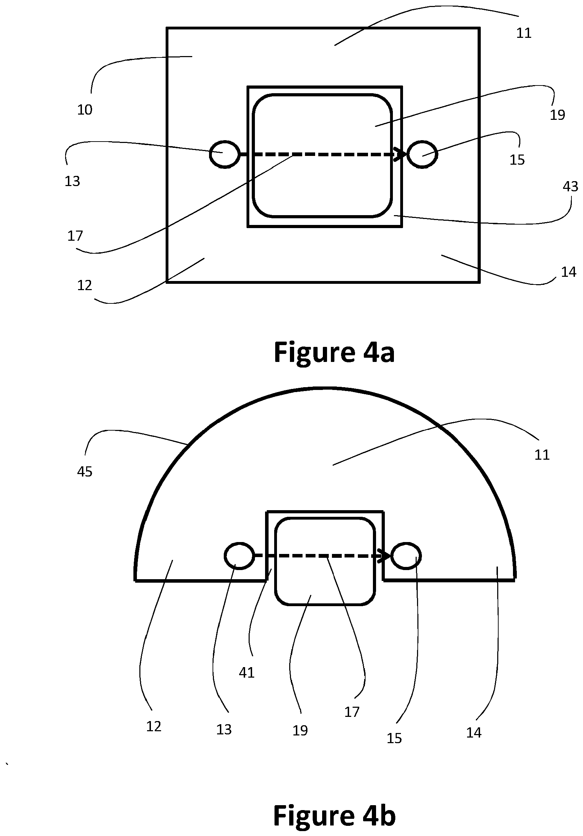

In another example of the apparatus 2 as shown in Figure 4a, the elongate body 10 may comprise a cross section which is a fully enclosed square in shape, with a central portion 43 removed throughout the length of the elongate body 10, said central portion 43 being located between the first and second portions 12, 14. In this example, the apparatus 2 may be configured to allow matter 19 in the gully into the removed central portion 43. The central portion 43 shown in Figure 4a is substantially square in shape but may be any shape suitable for the purposes of allowing matter 19 in the gully to intersect the light path 17 between the first and second portions 12, 14. Additional embodiments which are not shown may comprise a rectangular or ovular cross section, with a removed central portion configured as described above.

In a yet further example of the apparatus 2, the elongate body 10 may comprise a cross section which is significantly 'C-shaped,' where at least one side of the body 10 is arced 45 as shown in Figure 4b. In this example, the apparatus 2 may be configured to allow matter 19 in the gully into an indented portion 41 similar to the trench described previously. The trench being formed by the first portion 12, the second portion 14 and a third connecting portion 11 which connects the first 12 and second 14 portions. Additionally, the indented portion 41 may comprise side walls which are tapered. The bottom wall of the indented portion 41 may be straight or curved, but in the example shown it is straight.

In the example of the apparatus 2 where the aforementioned cross section is substantially C-shaped, the arrangement of the apparatus 2 confers the further advantage of allowing the sensor to be more easily removed from the gully, as the cross section helps to prevent hardened matter 19 in the gully from solidifying around the apparatus, which may prevent its removal. In this example the width of the elongate body 10 at its widest point is preferentially 20mm - 70mm and more preferably 45mm - 51 mm.

### Indentation

In an example arrangement of the apparatus 2 which includes an indented portion as described above, the indented portion 41 preferentially has a distance between the two side walls in the range of 10mm - 16mm, and more preferentially in the range 12.5mm - 13.5mm, at its narrowest point. In an arrangement of the apparatus 2 where the indented portion 41 has tapered side walls, the walls preferentially taper inwardly as the side walls extend inwardly toward the bottom wall of the indented portion 41 with a tapering angle in the range of 0 - 10°, further preferentially in the range 1 - 5°, and yet further preferentially in the range 2 - 4° In this example the distance between the two side walls of the indented portion 41 at its widest point is preferentially 12mm - 18mm and more preferably 14.5mm - 15.5mm in accordance with the tapering angle requirements as described above.

The path 17 of the light emitted by the one or more light sources 13 described in previous embodiments may be arranged to pass through the indented portion 41 described above, toward the one or more light detectors 15.

### Gully

The gully into which the apparatus 2 may be deployed into may in principle include any gully which is suitable for the insertion of an apparatus 2 as described. Preferably, the gully will be a roadside gully.

The apparatus 2 may also be further configured to be removable from the gully such that any necessary maintenance to the apparatus 2 or the gully may be carried out more simply. Subsequently, the apparatus 2 may then be redeployed in the gully (or a different gully if required).

The apparatus 2 may be suspended in the gully by use of a suitable cabling means wherein the cable may have one or more electrical wires for carrying electrical signals and for electrical power to/from the apparatus. This cabling may be further electrically coupled to the apparatus 2 to transmit electrical signals produced by the device to an external location.

### Light sources and light detectors

The light source 13 used in the apparatus 2 may be any source 13 which is able to emit light in a wavelength which may achieve the required functionality of the apparatus 2 directing light emitted from a suitable source 13 through matter 19 to be detected by a suitable light detector 15.

In one example of the apparatus 2, the light source 13 may emit light in any wavelength of the electromagnetic spectrum. In a further example of the apparatus 2, the light source 13 may emit light in the ultraviolet spectrum. Preferentially, the light source 13 emits light in the infra-red spectrum and further preferably is emitted in the range 800nm - 900nm.

In one example of the apparatus 2, the necessary electrical components are powered by a battery external to the sensor, with the power supplied to the apparatus by suitable cabling means. In a preferential arrangement of the apparatus, the power supply is configured to provide a potential difference in the range 3.2V - 4.0V, and more preferentially in the range 3.5V - 3.7V.

Additionally, the light detector 15 used in the apparatus 2 may be any detector which is able to detect the light emitted by the at least one light source 13.

In one example of the apparatus 2, the light detector may detect light in any wavelength of the electromagnetic spectrum. In a further example of the apparatus 2, the light detector may detect light specifically in the ultraviolet spectrum. Preferentially, the light detector 15 specifically detects light in the infra-red spectrum and further preferably is detected in the range 800nm - 900nm. The light detector 15 may be configured to detect light in a wavelength range corresponding to the wavelength range of the light emitted by the light source 13.

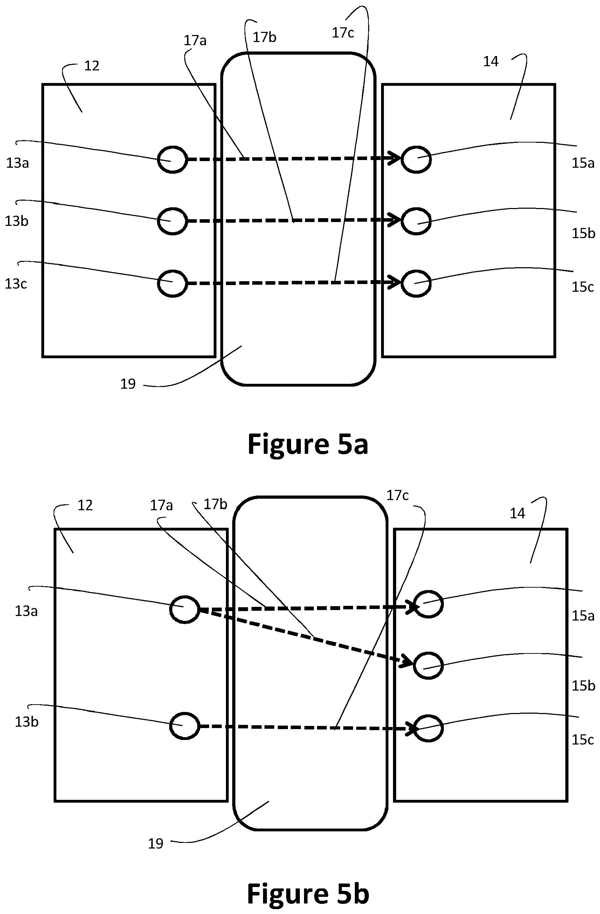

The apparatus 2 may itself also comprise a plurality of both light sources 13 and detectors 15. Figures 5a - 5c show three possible configurations of a plurality of sources 13 and detectors 15. The apparatus may have other configurations of light sources and detectors.

Where the apparatus 2 comprises a plurality of light sources 13, one or more of the plurality of light sources may be configured to emit light in a different wavelength of the electromagnetic spectrum to the remainder of the plurality of light sources. For example, a first and second light source may be configured to emit light in the infra-red spectrum, and a third and fourth light source may be configured to emit light in the ultraviolet spectrum.

Where the apparatus 2 additionally comprises a plurality of light detectors 15, one or more of the plurality of light detectors may be configured to detect light in a different wavelength of the electromagnetic spectrum to the remainder of the plurality of light detectors. For example, a first and second light detector may be configured to detect light in the infra-red spectrum, and a third and fourth light detector may be configured to detector light in the ultraviolet spectrum.

Where the plurality of light sources and detectors are arranged to emit and detect light of different wavelengths respectively, each of the plurality of light detectors 15 may be further configured to detect light emitted by a specific subset of the plurality of light sources 13. For example, a first light detector 15 may be configured to detect light emitted from a first and second light source, and a second light detector may be configured to detect light emitted from a third and fourth light source.

Figure 5a shows an example of the apparatus 2 where the plurality of sources 13a-c and detectors 15a-c are disposed on opposite sides of the trench and along the length of the elongate body such that the sources and detectors are in a one-to-one correspondence. I.e. the number of sources 13a-c is equal to the number of detectors 15a-c, and each source 13a-c is configured to direct light along a light path 17a-c at exactly one detector 15 a-c and each detector 15 a-c is configured to receive light from exactly one source 13 a-c. In this way, the light sources and light detectors may be considered to be aligned.

Figure 5b shows an example of the apparatus 2 where the number of light detectors 15a-c is greater than the number of light sources 13a-b and each source 13a-b may be configured to direct light along multiple light paths 17 a-c toward multiple detectors 15a-c.

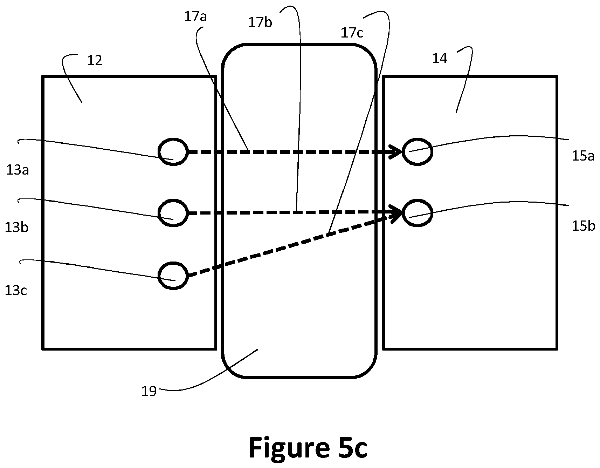

Figure 5c shows an example of the apparatus 2 where the number of light sources 13a-c is greater than the number of light detectors 15a-b and each detector 15a-b may be configured to receive light from multiple sources 13a-c along multiple light paths 17 a-c.

Including a plurality of sources 13 and detectors 15 in the apparatus 2, confers the ability to measure the matter 19 in the gully at a plurality of levels, thereby enabling multiple detections of the matter 19 (at different positions along the length of the elongate body) whilst only requiring one singular apparatus 2, thereby enabling a potential reduction in manufacturing costs. Additionally, if there are a plurality of both sources 13 and detectors 15, it enables the apparatus 2 to be more resilient against malfunction, as a failure of one of the sources 13 or detectors 15 does not cause the malfunction of the entire device as useful measurements may still be made using the sources 13 and detectors 15 which are not faulty. It also helps to prevent the possibility of the apparatus 2 providing a false positive reading; in the case where there is only one source 13 and/or detector, the failure of the singular element may result in a lack of measurement being interpreted as matter 19 being present in the gully, when in fact there is none.

Where there are multiple sources 13 and or receivers 15, the sources 13 and or receivers 15 are preferentially spaced by a distance of 2.5cm - 10cm, and further preferentially spaced by a distance of 5cm - 8cm.

### Matter

The matter 19 which is to be measured in the gully by the apparatus 2 may consist of any matter which is normally expected to be found in a gully such as, but not limited to, water and silt, herein referred to as primary matter. The apparatus 2 may additionally measure the presence of other matter which is not of primary interest to the user of the apparatus 2 such as, but not limited to, leaves and solid litter, herein referred to as secondary matter.

In one example, the apparatus 2 is configured to measure the fill level of primary matter in the gully. This may relate to one measurement where there is only one light path being intersected by matter 19 in the gully (in the case of only one source 13 and one receiver 15), or it may relate to a plurality of measurements being made in the case of multiple light paths being intersected by matter 19 in the gully (in the case of a plurality of sources 13 and/or receivers 15).

In a further example, the apparatus 2 is configured to measure the turbidity of the matter 19 in the gully. This may be achieved by using a light source 13 configured to emit light in a wavelength range which is absorbed or scattered by different amounts depending on the turbidity of the matter 19 it interacts with. The light detector is similarly configured to receive such light, and the amount of light which is received will be used to determine the degree of turbidity of the matter 19 by way of reference to expected light levels for different degrees of turbidity. This may relate to one turbidity measurement where there is only one light path being intersected by any potential matter 19 in the gully (in the case of only one source 13 and one receiver), or it may relate to a plurality of turbidity measurements being made in the case of multiple light paths being intersected by any matter 19 in the gully (in the case of a plurality of sources 13 and/or receivers 15).

### Information transmission

The apparatus 2 may be configured to transmit the measurements it has made to an external device where it may be read and analysed by a user. This is preferentially achieved by converting the electric signals produced by the apparatus 2 into machine readable messages. In one example of the apparatus 2, the electric signals are converted into a hexadecimal number ranging from 00 to FF. If there are multiple signals received due to there being a plurality of light detectors, then each of these signals may be converted into a hexadecimal number. These numbers may then be concatenated into a signal data string with an identifier associated with each number to determine which signal relates to each detector. This data string may comprise an ASCII string.

Further, the apparatus 2 is preferentially configured to transmit the measurements by coupling with an appropriate electrical contact which is additionally coupled to an external transmitter head unit. From the transmitter head unit, the message may then further be transmitted to an appropriate external computing device via a suitable communication means. This transmission may be wired or wireless.

### Apparatus Manufacture and Encapsulation

As the apparatus 2 comprises electronic components and may be expected to be deployed in high moisture environments, the apparatus 2 may be arranged to be waterproof. Preferentially, the apparatus 2 is arranged to be waterproof by encapsulation to the IP68 standard. This waterproofing may be achieved by the method of production of the apparatus 2. The casing of the elongate body 10 of the apparatus 2 is preferentially formed of a hollow tube which has unsealed ends, which may be produced with the required cross section through extrusion moulding and preferentially comprises a material which is optically clear, stable to ultra-violet radiation, scratch resistant and suitable for production via an extrusion moulding process. Further preferentially, the tubing is comprised of transparent PETG.

The required electronic components may then be positioned inside the elongate body. In one embodiment of this apparatus, the required electronic components will be mounted on a PCB and this PCB will be placed on mountings formed on the inside of the elongate body 10.

When the electronic components have been appropriately positioned in the elongate body 10, the tube may then substantially be filled using a first potting compound, such as a hardened resin which is suitable for transmission of light from the one or more light sources 13. The compound may be appropriately chosen to have an approximately similar refractive index to that of the elongate body in order to minimise the refraction or reflection of the light emitted from the one or more light sources 13 and to help minimise scattering at material interfaces. Potting the elongate body conveys the advantage of making the apparatus resistant to shock and vibration and also to resist the absorption of moisture into the apparatus.

The proximal and distal ends of the substantially potted elongate body 10 may then be further potted using a second alternate potting compound filling material which is more resistant to water absorption such that the first potting compound is bounded at opposite ends of the elongate body by the second potting compound. This second filling compound may comprise an epoxy composite. This second compound is preferentially a black resin potting compound, with a suitable compound being Robnor PX804C/BK.

Furthermore, the apparatus 2 may be configured to include caps at the proximal and distal ends of the elongate body 10 to further aid in the encapsulation of the apparatus 2. This may also aid in attaching any necessary cabling to the apparatus 2. The caps may be attached to the elongate body 10 by a means suitable for secure fastening in the gully environment such as with strong glue or other attachment means or techniques such as thermal bonding. The caps may be further adapted to allow the cabling to allow electrical coupling to the electronic components inside the elongate body 10. This may be achieved by including a hole in the proximal and/or distal caps and hardened potting compounds.

### Electronics

In principle, the apparatus 2 may be formed using any number and type of components which allow for the production of an electric signal upon detection of emitted light at the light receiver. These components may be housed on the interior of the elongate body 10, and may be contained within at least one suitable potting compound as previously described. Suitable components may include a suitable power source such as a lithium battery or other suitable DC power source and/or electrical connections to such a power source held externally, a signal modulator, suitable light sources such as light emitting diodes (LEDs) and suitable light detectors such as phototransistors.

Where suitable, the components are preferentially arranged on PCBs, which may be placed into appropriate mountings on the interior of the elongate body 10 as described above. Where the apparatus 2 is arranged to make multiple detections, the electronics required for each of the measurements may be arranged on multiple separated PCBs. Preferentially in said arrangement, the required electronics for multiple measurements are arranged on a single PCB which is arranged along the full length of the elongate body 10.

In examples of the apparatus 2 comprising a shape with a connecting portion 11, the components allowing for the production of an electric signal upon detection of emitted light may be substantially located within the connecting portion of the apparatus 2. Said components will typically exclude the one or more light sources and light detectors, which will typically be located in the first portion 12 and second portion 14 respectively.

### Further Examples

A specific embodiment of this device is described below. This embodiment may be adapted or otherwise modified with the components, ranges and other features described herein.

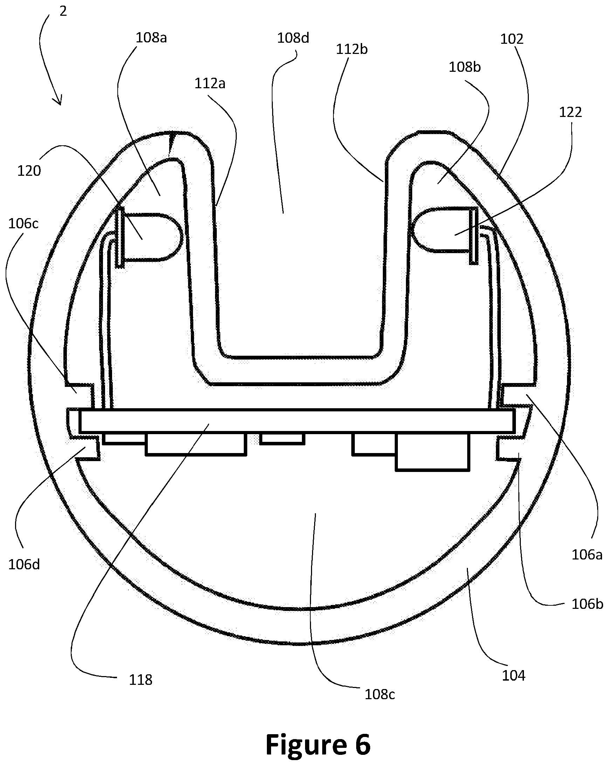

Figure 6 shows an example of the apparatus 2 in a top down view. The apparatus 2 comprises an elongate body 10 which houses an electronic circuit and suitable electronic components which enable the measuring of fill levels of matter 19 in a gully, and further enables elements of the composition of this matter 19 to be measured. Light is emitted from a light source 120 which is in alignment with a light detector 122 opposite from the source 120. The light path is arranged such that any matter 19 in the gully will intersect at least a portion of the light path. In the present embodiment, the light detector 122 may comprise a phototransistor. The light emitted from the light source 120 is converted into electrical energy through the use of the phototransistor 122 and is used to generate a hexadecimal number corresponding to a predefined level of opacity which defines various compositions of the matter 19.

The present embodiment consists firstly of a hollow tube formed defining a C-shaped profile and is formed using an extrusion moulding process. In the present embodiment, the tubing is comprised of PETG. The tube consists of a wall 104 of thickness 4mm and has a diameter of 48mm at its widest point. Additionally, the tube is formed with four mounting projections 106a-d on the interior of the tube along the full length of the tube of depth 2mm, although the projections could extend along only a portion of the length of the tube. These projections are for securely mounting a suitable platform for placing the electronic circuits 118 required which may be used to measure the level and composition of the matter 19. In the current embodiment, the circuits are mounted on a single PCB. The plurality of electronic components are enclosed entirely within the tube, with no element of them being external. When the electronic components are securely mounted in the hollow tubing, the interior of the tubing is then substantially filled with a clear hardened resin potting compound. In the present embodiment, the compound is comprised of ALH Systems NP1170. This compound is then allowed to set and harden in order to securely pot the sensor.

The C-profile is used to define four distinct regions 108a-d. Broadly defined, area 108a comprises a first portion where a light source 120 is housed, 108b comprises a second portion where a light receiver such as a phototransistor 122 is housed, 108c which comprises a connecting portion between portions 108a and 108b and may be used to house the electronic circuit as defined above, and area 108d is defined as being the area between the two walls of the C-profile tube 112a and 112b which is outside of the tube itself and comprises the area in which the light path 17 is directed across towards the phototransistor and further comprises the area in which the matter 19 may intersect the light path.

In the present embodiment, the light source emits light in the infra-red (IR) spectrum across the gap 108d in the C-profile tube between the two portions 108a and 108b toward the phototransistor which is optimised to detect said light. The gully sensor is positioned in such a way that matter 19 is allowed to flow into said gap and act as a potential hindrance to the transmission of this light. The phototransistor then detects the amount of radiation whose transmission has not been hindered by the matter 19, and through means known to a person skilled in the art, converts this radiation into an electrical signal. The electrical signal received is then converted into an ASCII data string prefixed with a number relating to the level. This is subsequently passed to a transmitter so that the reading can be read remotely by suitable computing software. The IR light which is produced is entirely enclosed within the C-profile of the tubing.

As the source and phototransistor are entirely enclosed within the tubing, the emitted IR light must also travel through a width of the tubing wall at least twice, which will cause some of the IR light to be scattered or absorbed by the wall material that the light path intersects with. This amount of absorption or scattering is pre-measured or accounted for in a calibration measurement and therefore the device is calibrated to account for this absorption or scattering when taking measurements.

The degree to which the IR light is absorbed or scattered is dependent upon the composition of the gully matter 19. In the event that the matter 19 is comprised of clean water, a minimal amount of the light will be absorbed, which will lead to a signal indicating such. In the event that the matter 19 becomes turbid or consists of silt, the path for the IR light may become totally obscured and the IR light will be maximally absorbed or scattered. There will be many levels of obfuscation between these two extremes which are distinct enough to be detected as separate obfuscation levels by the phototransistor. In this way, the sensor is able to distinguish the composition of the matter 19 against reference levels.

Furthermore, in the present embodiment, the two walls 112a and 112b are tapered at an angle of 3° such that the trench profile 108d is trapezoidal in profile. This has been designed for the prevention of detritus becoming lodged in the area between the light source and the phototransistor. Said detritus may comprise larger objects such as whole leaves and any larger solid objects which may hinder the functionality of the device if the objects become stuck in the trench profile 108d, but may feasibly come into contact with the apparatus. Any such detritus may lead to unwanted absorption or scattering of the IR light, subsequently leading to an erroneous measurement of the fill level and composition of the matter 19. Therefore the shaping of the gap region 108d to limit the amount of said detritus is important for the efficient operation of the apparatus. The walls 112a and 112b are additionally polished to allow efficient transfer of the IR light between the source 120 and the detector 122, with minimal scatter within the apparatus 2.

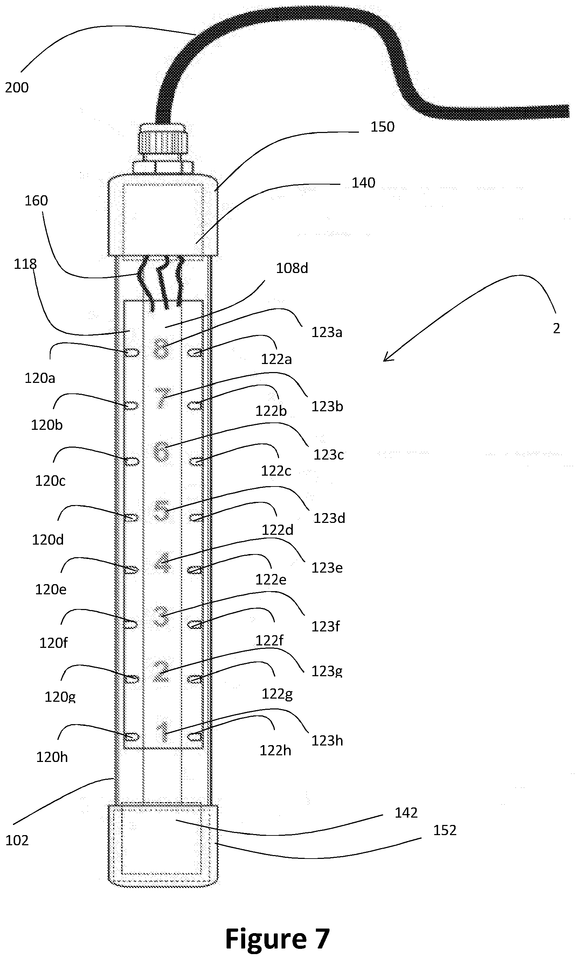

Figure 7 shows the device 2 viewed from the side in a vertically operable position as it may be configured when in use in a gully. In this configuration, a plurality of light sources 120a-h can be seen facing a plurality of phototransistors 122a-h, with the light being directed across the gap 108d. Additionally, the casing 102 and PCB 118 are illustrated. In the apparatus illustrated, there are a total of eight sources 120a-h which are aligned with eight phototransistors 122a-h, which correspond to eight levels 123a-h where a measurement of the incumbent matter may be made, with each pair of source and phototransistor comprising a separate system. In alternate embodiments, the total number of systems, and consequently, measurable levels, can be varied to be 2, 4, 8, 12, 16 or 32. In this embodiment, the distance between the levels is 6.5cm.

The plurality of IR light source and phototransistor systems each operate in isolation with separate circuitry and are configured to provide a measurement of the composition and fill level of the gully for each of the systems for each of the systems independently. Each of these measurements is then passed to the transmitter as a separate message to be read remotely by suitable computing software. In this way, the device provides a plurality of measurements which, when combined may indicate the total depth of the matter and the composition of the matter 19 at each level. For example, in Figure 7, the light source 120a configured to direct IR light at level 123a toward phototransistor 122a may indicate that there is no absorption or scattering of the light, the light source 120e configured to direct IR light at level 123e toward phototransistor 122e may indicate that there is a small amount of absorption or scattering and the light source 120h configured to direct IR light at level123h toward phototransistor 122h may indicate that there is a high degree of absorption or scattering. This may later be used to interpret that the matter 19 has not reached the height of level 123a, the matter 19 at level 123e is comprised of largely clean water and the matter 19 at level 123h is of a more turbid nature.

The present embodiment is also filled with a second potting compound conveyed at the proximal 140 and distal 142 ends of the elongate body such that the first potting compound is bounded at opposite ends of the elongate body by the second potting compound. The compound used is a submarine grade black resin potting material, such as Robnor PX804C/BK. The inclusion of this feature helps to fully encapsulate the apparatus to allow it to be fully waterproof to the IP68 standard.

Another feature of the device in this embodiment is to include proximal 150 and distal 152 caps on the tubing which substantially surround the ends of the casing 102, as well as extending down a length of the casing 102. In combination with the formation of the tubing and the black resin potting compound, this enables the device to be fully waterproof by encapsulation to the IP68 standard. In this embodiment, the caps are comprised of rubber. The caps are either attached to the proximal and distal ends of the tubing with strong glue which will not degrade in the gully environment, or otherwise formed upon both ends by using a process such as thermal bonding.

A cable 200 is attached to the proximal cap 150 via a suitable means, such as a screw and locking nut arrangement and the sensor is suspended from this cable into the gully. The cable is also electrically coupled to the apparatus. This is achieved by drilling a hole in the proximal cap 150 which is sufficiently sized to allow the cable to pass through it, but to not substantially compromise the water permeability of the sensor. In this embodiment, the cable is 15mm in diameter and the drilled hole is 20mm in diameter. This cable is further attached to a transmitter system located at a level above the gully and enables the relaying of the signals generated by the plurality of IR source and phototransistor systems to the transmitter via the electrical coupling means 160, where the messages are subsequently transferred to suitable computing software. The cable further enables the suspended sensor to be positioned correctly in the gully, as determined by a user. This also enables the sensor to be more easily repositioned if desired.

Upon the ASCII data strings being received at the transmitter, the data is output as a single string in Hex Format, commencing with a * for each level and the level number. Each level is then equated to a further two digit hexadecimal number which indicates the level of absorption or scattering of the IR light, ranging from possible levels of 00-FF. This text string is then transmitted to suitable remote computing software for interpretation. This process of concatenation of the ASCII data strings is performed after each data read cycle, which in the present embodiment of 8 levels lasts for a duration of 200ms.

The present embodiment is optimised for long term battery operation from a single 3.6V lithium cell, but can be operated from any stable supply ranging between 3.2V and 4V DC. The lithium cell is stored externally to the gully sensor and power is supplied through the electrically coupled cabling means 200. The gully sensor can be left in a powered state, in which case, a remote command requesting a data read cycle simply needs to be sent. However, the sensor is optimised such that the longest operation from a single battery is obtained by powering the sensor up and down, with the sensor being remotely powered up before a data read cycle is to be initiated and subsequently powered down after the data read cycle is completed.

## Claims

1. A gully sensor (2) for deployment within, and detecting the presence of matter (19) contained in, a gully, the gully sensor comprising an elongate body (10), the body comprising:
a first portion (108a) accommodating a light source (120);
a second portion (108b) accommodating a light detector (122) for detecting light emitted from the light source along a light path (17) towards the light detector;
a third portion (108c) connecting the first and second portions; and
an indented portion (108d) formed between the first, second and third portions, wherein the indented portion forms a trench configured to enable the matter (19) to enter the trench, and wherein the light path is configured to pass through the indented portion; and
wherein the elongate body (10) comprises a cross sectional profile that is substantially C-shaped, and wherein an outer peripheral wall (104) of the elongate body comprises a tube, and the cross sectional profile of the elongate body extends throughout the length of the tube.

2. The gully sensor of Claim 1, where the light source is configured to emit infra-red light and/or ultra-violet light.

3. The gully sensor of any previous claim, wherein the sensor is configured to measure the degree to which the gully is filled with matter and/or to measure the turbidity of the matter in the gully.

4. The gully sensor of any previous claim, wherein the sensor comprises a plurality of light sources and/ or a plurality of light detectors.

5. The gully sensor of any previous claim, wherein the sensor is configured to transmit, via wired electronic means, signals from the one or more detectors to an external transmitter device.

6. The gully sensor of any previous claim, wherein the sensor is configured for deployment in the gully by the attachment of a cable to the elongate body, said cable allowing the sensor to be adjustably positioned in the gully.

7. The gully sensor of any previous claim, where the third portion of the elongate body which is coupled with both the first and second portion is configured to house electronic components.

8. The gully sensor of any previous claim, where the outer peripheral wall of the elongate body is at least partially transparent to wavelengths of light which are emitted by the one or more light sources.

9. The gully sensor of any previous claim, where the elongate body further comprises a set of mountings on the interior of the elongate body, configured to accommodate a printed circuit board.

10. The gully sensor of Claim 1, where the first portion comprises a first side wall of the indented portion, the second portion comprises a second side wall of the indented portion and the third portion comprises a bottom wall of the indented portion which connects the two side walls of the indented portion.

11. The gully sensor of Claim 10, where the side walls and the bottom wall comprise straight portions; the straight portions of the side walls being tapered at an angle of between zero and ten degrees to the normal of the straight portion of the bottom wall.

12. The gully sensor of Claim 10, where the said side walls of the indented portion of the sensor comprise a polished interior face and/or a polished exterior face.

## Patentansprüche

1. Gully-Sensor (2) für einen Einsatz innerhalb, und Detektieren des Vorhandenseins von Materie (19), die in einem Gully-Sensor enthalten ist, der Gully-Sensor umfassend einen länglichen Körper (10), der Körper umfassend:
einen ersten Abschnitt (108a), der eine Lichtquelle (120) aufnimmt;
einen zweiten Abschnitt (108b), der einen Lichtdetektor (122) zum Detektieren von Licht aufnimmt, das von der Lichtquelle entlang eines Lichtwegs (17) zu dem Lichtdetektor hin emittiert wird;
einen dritten Abschnitt (108c), der den ersten und den zweiten Abschnitt verbindet; und
einen vertieften Abschnitt (108d), der zwischen dem ersten, dem zweiten und dem dritten Abschnitt ausgebildet ist, wobei
der vertiefte Abschnitt einen Graben ausbildet, der konfiguriert ist, um es der Materie (19) zu erlauben, in den Graben einzutreten, und wobei der Lichtweg konfiguriert ist, um durch den vertieften Abschnitt hindurch zu verlaufen; und
wobei der längliche Körper (10) ein Querschnittsprofil umfasst, das im Wesentlichen C-förmig ist, und wobei eine äußere Umfangswand (104) des länglichen Körpers ein Rohr umfasst und sich das Querschnittsprofil des länglichen Körpers über die gesamte Länge des Rohrs erstreckt.

2. Gully-Sensor nach Anspruch 1, wobei die Lichtquelle konfiguriert ist, um Infrarotlicht und/oder Ultraviolettlicht zu emittieren.

3. Gully-Sensor nach einem der vorstehenden Ansprüche, wobei der Sensor konfiguriert ist, um den Grad zu messen, zu dem der Gully mit Materie gefüllt ist, und/oder um die Trübung der Materie in dem Gully zu messen.

4. Gully-Sensor nach einem der vorstehenden Ansprüche, wobei der Sensor eine Vielzahl von Lichtquellen und/oder eine Vielzahl von Lichtdetektoren umfasst.

5. Gully-Sensor nach einem der vorstehenden Ansprüche, wobei der Sensor konfiguriert ist, um über drahtgebundene elektronische Mittel Signale von dem einen oder den mehreren Detektoren zu einer externen Sendervorrichtung zu senden.

6. Gully-Sensor nach einem der vorstehenden Ansprüche, wobei der Sensor zum Einsetzen in dem Gully durch die Anbringung eines Kabels an den länglichen Körper konfiguriert ist, wobei das Kabel ermöglicht, dass der Sensor in dem Gully einstellbar positioniert werden kann.

7. Gully-Sensor nach einem der vorstehenden Ansprüche, wobei der dritte Abschnitt des länglichen Körpers, der sowohl mit dem ersten als auch mit dem zweiten Abschnitt gekoppelt ist, konfiguriert ist, um elektronische Komponenten zu beherbergen.

8. Gully-Sensor nach einem der vorstehenden Ansprüche, wobei die äußere Umfangswand des länglichen Körpers mindestens teilweise für Lichtwellenlängen transparent ist, die durch die eine oder die mehreren Lichtquellen emittiert werden.

9. Gully-Sensor nach einem der vorstehenden Ansprüche, wobei der längliche Körper ferner einen Satz von Halterungen auf dem Inneren des länglichen Körpers umfasst, der konfiguriert ist, um eine Leiterplatte aufzunehmen.

10. Gully-Sensor nach Anspruch 1, wobei der erste Abschnitt eine erste Seitenwand des vertieften Abschnitts umfasst, wobei der zweite Abschnitt eine zweite Seitenwand des vertieften Abschnitts umfasst und der dritte Abschnitt eine untere Wand des vertieften Abschnitts umfasst, der die zwei Seitenwände des vertieften Abschnitts verbindet.

11. Gully-Sensor nach Anspruch 10, wobei die Seitenwände und die untere Wand gerade Abschnitte umfassen; die geraden Abschnitte der Seitenwände in einem Winkel zwischen Null und zehn Grad zu der Normalen des geraden Abschnitts der unteren Wand verjüngt sind.

12. Gully-Sensor nach Anspruch 10, wobei die Seitenwände des vertieften Abschnitts des Sensors eine polierte Innenfläche und/oder eine polierte Außenfläche umfassen.

## Revendications

1. Capteur de puisard (2) destiné à être déployé à l'intérieur d'un puisard, et à détecter la présence de matière (19) contenue dans celui-ci, le capteur de puisard comprenant un corps allongé (10), le corps comprenant :
une première partie (108a) qui reçoit une source de lumière (120) ;
une deuxième partie (108b) qui reçoit un détecteur de lumière (122) pour détecter la lumière émise à partir de la source de lumière le long d'un trajet de lumière (17) vers le détecteur de lumière ;
une troisième partie (108c) qui relie les première et deuxième parties ; et
une partie en retrait (108d) formée entre les première, deuxième et troisième parties, dans lequel
la partie en retrait forme une tranchée conçue pour permettre à la matière (19) d'entrer dans la tranchée, et dans lequel le trajet de lumière est conçu pour passer à travers la partie en retrait ; et
dans lequel le corps allongé (10) comprend un profil en section transversale qui est sensiblement en forme de C, et dans lequel une paroi périphérique externe (104) du corps allongé comprend un tube, et le profil en section transversale du corps allongé s'étend sur toute la longueur du tube.

2. Capteur de puisard selon la revendication 1, dans lequel la source de lumière est configurée pour émettre de la lumière infrarouge et/ou de la lumière ultraviolette.

3. Capteur de puisard selon l'une quelconque revendication précédente, dans lequel le capteur est configuré pour mesurer le degré auquel le puisard est rempli de matière et/ou pour mesurer la turbidité de la matière dans celui-ci.

4. Capteur de puisard selon l'une quelconque revendication précédente, dans lequel le capteur comprend une pluralité de sources de lumière et/ou une pluralité de détecteurs de lumière.

5. Capteur de puisard selon l'une quelconque revendication précédente, dans lequel le capteur est configuré pour transmettre, par l'intermédiaire de moyens électroniques câblés, des signaux provenant du ou des détecteurs à un dispositif émetteur externe.

6. Capteur de puisard selon l'une quelconque revendication précédente, dans lequel le capteur est configuré pour un déploiement dans le puisard par la fixation d'un câble au corps allongé, ledit câble permettant au capteur d'être positionné de manière réglable dans le puisard.

7. Capteur de puisard selon l'une quelconque revendication précédente, où la troisième partie du corps allongé qui est accouplée à la fois aux première et deuxième parties est conçue pour loger des composants électroniques.

8. Capteur de puisard selon l'une quelconque revendication précédente, dans lequel la paroi périphérique externe du corps allongé est au moins partiellement transparente aux longueurs d'onde de lumière qui sont émises par la ou les sources de lumière.

9. Capteur de puisard selon l'une quelconque revendication précédente, dans lequel le corps allongé comprend en outre un ensemble de supports sur l'intérieur du corps allongé, conçus pour recevoir une carte de circuit imprimé.

10. Capteur de puisard selon la revendication 1, dans lequel la première partie comprend une première paroi latérale de la partie en retrait, la deuxième partie comprend une seconde paroi latérale de la partie en retrait et la troisième partie comprend une paroi inférieure de la partie en retrait, qui relie les deux parois latérales de la partie en retrait.

11. Capteur de puisard selon la revendication 10, où les parois latérales et la paroi inférieure comprennent des parties droites ; les parties droites des parois latérales étant coniques selon un angle compris entre zéro et dix degrés par rapport à la normale de la partie droite de la paroi inférieure.

12. Capteur de puisard selon la revendication 10, où lesdites parois latérales de la partie en retrait du capteur comprennent une face intérieure polie et/ou une face extérieure polie.
